# EUROPÄISCHE PATENTSCHRIFT

(11) **EP 0 979 447 B1**
(45) Veröffentlichungstag und Bekanntmachung des Hinweises auf die Patenterteilung: **09.07.2003**
(21) Anmeldenummer: 98931902.5
(22) Anmeldetag: 09.04.1998
(51) Int. Cl.: G06F 3/12

(54) **VERFAHREN ZUM STEUERN EINES DRUCKERS**
METHOD FOR CONTROLLING A PRINTER
PROCEDE DE COMMANDE D'UNE IMPRIMANTE

(30) Priorität: 30.04.1997 DE 19718417
(43) Veröffentlichungstag der Anmeldung: 16.02.2000
(73) Patentinhaber: Océ Printing Systems GmbH, 85586 Poing (DE)
(72) Erfinder: SCHEIDIG, Karola, D-85652 Pliening (DE); WARBUS, Volker, D-82041 Oberhaching (DE); LAY, Heinrich, D-84513 Töging (DE)
(74) Vertreter: Schaumburg, Thoenes & Thurn
(86) Internationale Anmeldenummer: DE9801038
(87) Internationale Veröffentlichungsnummer: WO98049615

(56) Entgegenhaltungen:
- WO-A-96/01456
- WO-A-96/18142

## Beschreibung

Die Erfindung betrifft einen Drucker und ein Verfahren zum Steuern eines Druckers nach dem Oberbegriff des Anspruchs 1. Elektronische Drucker werden durch eine Vielzahl von Parametern gesteuert. Die verschiedenen Komponenten bzw. Aggregate des Druckers werden dabei je nach gewünschter Informationsausgabe in unterschiedliche Zustände versetzt.

Aus der WO-96/02872 A ist beispielsweise ein elektrophotographisches Hochleistungsdrucksystem mit einer Vielzahl von Aggregaten bekannt. Aus der DE 41 264 65 C1 ist eine Steuerungseinrichtung bekannt, die ein EDV-System mit einem derartigen elektrophotographischen Hochleistungsdrucker verbindet.

Die Parameter zur Ansteuerung der Druckaggregate können je nach gewünschten Druckbildern variieren. Dabei lassen sich zum Beispiel horizontale Verschiebungen des Druckbildes, verschiedene Tonertypen nach Farbe oder Aufzeichnungsdichte usw. einstellen, oder die Druckbreite an vorgegebene bzw. vorgedruckte Formulare anpassen, die von dem Drucker mit individuellen Daten der EDV-Datenquelle bedruckt werden sollen.

Zur Inbetriebnahme eines Druckers oder auch beim Wechseln des Druckers von einem Auftrag (job) einer ersten Art zu einem Auftrag (job) einer zweiten Art, ist es erforderlich, bestimmte Einstellparameter in einen flüchtigen Arbeitsspeicher der Drucker-Gerätesteuerung einzulesen, beispielsweise die Länge und die Breite des in den Drucker eingelegten Papiers; eine Information, ob das Papier einseitig oder doppelseitig zu bedrucken ist; Informationen zur Einstellung des Kontrastes, beispielsweise durch Wählen bestimmter Fixierparameter wie Fixiertemperatur oder Umschlingungswinkel beim Fixieren eines elektrophotographisch erzeugten Bildes auf dem Papier. Hinzu kommt, daß die Druckdaten, welche von einem EDV-System an einen Drucker geleitet werden, in einer Vielzahl möglicher Druckersprachen bzw. Emulationsmodes kodiert sein können. Beispiele solcher Druckersprachen bzw. Emulationsmodes sind ASCII, I-Mode, C-Mode, T-Mode, E-Mode, L-Mode, PCL4-Mode oder PCL5-Mode. Derartige Drucker-Sprachen und Maßnahmen zur Erkennung dieser Drucker-Sprachen sind beispielsweise in der US 5,222,200 A beschrieben.

In einigen elektrophotographischen Hochleistungsdruckern werden deshalb Setup-Datensätze in den Arbeitsspeicher der Druckersteuerung eingeschrieben, die den gewünschten Druckereinstellungen und jeweils einer bestimmten zu verarbeitenden Drucksprache entsprechen. Ein derartiger Drucker ist aus der JP 08-202512 A bekannt. Bei solchen Druckern ist es erforderlich, einen neuen Setup-Datensatz in den Arbeitsspeicher zu laden, wenn eine andere Einstellung gewünscht wird oder wenn sich die zu verarbeitende Druckersprache ändert.

Bei Hochleistungs-Druckern, die in einem Netzwerk betrieben werden sollen, bei dem also Druckanforderungen von verschiedensten Datenquellen an mehrere, parallel im selben Datennetz arbeitende Drucker verteilt werden, ist es sehr aufwendig, sie jeweils in eine geforderte Einstellung zu bringen, weil bei Hochleistungsdruckern sehr viele Parameter einzustellen sind.

Aus der WO 96/01456 A1 ist ein Drucksystem mit einem Host-Computer und mindestens einem physikalischen Drucker bekannt. Druckdaten werden dabei von dem Host-Computer an einen virtuellen Druckertyp gesandt und von dem physikalischen Drucker, der diesen virtuellen Druckertyp unterstützt, ausgedruckt. Im physikalischen Drucker sind dazu verschiedene Systemeinstellungen vorgesehen, die jeweils verschiedenen virtuellen Druckertypen zugeordnet sind. Für den Benutzer erscheint dabei jede Standard-Druckereinstellung als separater Drucker.

Aus der WO 96/18142 A sind ein Druckgerät und ein Druckverfahren bekannt, bei denen verschiedene Druckersprachen erkannt werden, wobei ein Rasterungsprozeß der Druckdaten in Abhängigkeit von der erkannten Druckersprache gesteuert wird. Das Druckgerät geht dabei nach dem Erkennen einer Druckersprache regelmäßig in einen Stand-By-Zustand über und wartet auf weitere Eingaben des Benutzers, bevor ein erneuter Ausdruck erfolgen kann.

Es ist Aufgabe der Erfindung, einen Drucker und ein Verfahren zum Steuern eines Hochleistungs-Druckers anzugeben, in dem der Drucker relativ einfach an verschiedenste Druckanforderungen angepaßt werden kann und bei dem während des Druckbetriebs möglichst wenig Anpassungen vorgenommen werden müssen.

Diese Aufgabe wird durch die Erfindung mit den Merkmalen der Patentansprüche 1 oder 7 gelöst. Vorteilhafte Ausführungsformen der Erfindung sind in den übrigen Ansprüchen angegeben.

Erfindungsgemäß wird in einen Arbeitsspeicher einer elektronischen Druckersteuerung ein Setup-Datensatz geladen, der sowohl sprachunabhängige Steuerungsdaten als auch Steuerungsdaten zu mehreren, verschiedenen Druckersprachen enthält.

Die Erfindung erreicht gegenüber den Lösungen des Standes der Technik den Vorteil, daß die Druckersteuerung sehr schnell aus ihrem nicht flüchtigen Arbeitsspeicher, welcher kurze Zugriffszeiten hat, über die gespeicherten Daten verfügen kann. In einem Drucksystem, bei dem im permanenten Betrieb häufig Daten unterschiedlicher Druckersprachen verarbeitet werden müssen, stellt sich der Drucker dann sehr schnell automatisch auf geänderte Sprachen ein. Andererseits erlaubt das Laden eines spezifischen Setup-Datensatzes mit sprachunabhängigen Steuerungsdaten wie Papierbreite, Druckart ein- oder zweiseitig, Fixiereinrichtungsparameter etc., daß diese Daten erhalten bleiben, wenn sich die Druckersprache der ankommenden Daten ändert. Die Kopplung dieser beiden Datenarten (sprachunabhängig und sprachabhängig) in ein- und demselben Setup-Datensatz erlaubt es auch dem ungeschulten Benutzer, relativ einfach zwischen Setup-Einstellungen verschiedener Arten umzustellen und dabei die Kompatibilität mit verschiedenen Druckersprachen beizubehalten. Vorzugsweise wird der zu ladende Setup-Datensatz aus mehreren verschiedenen Setup-Datensätzen ausgewählt, die jeweils verschiedene sprachabhängige Steuerungsdaten und/oder verschiedene sprachunabhängige Steuerungsdaten enthalten.

Vorzugsweise ist ein Hochleistungsdrucker modular aufgebaut, wobei eine Gerätesteuerung zur Steuerung der verschiedener Aggregate-Steuerungen vorgesehen ist sowie eine Bedienfeldeinheit, die mit der Geräte-Steuerung zum Austausch von Daten verbunden ist. Bei dieser Ausführungsform sind in der Bedienfeldeinheit verschiedene Setup-Datensätze gespeichert, aus denen ein gewünschter Setup-Datensatz in einen Arbeitsspeicher der Gerätesteuerung geladen wird. Beim Empfang von Druckdaten einer bestimmten Drucksprache werden erfindungsgemäß die der Drucksprache entsprechenden Steuerungsdaten des im Arbeitsspeicher geladenen Setup-Datensatzes zur Steuerung des Druckers verwendet.

Vorzugsweise wird mit einer Detektoreinrichtung automatisch ermittelt, in welcher Druckersprache die Druckdaten vorliegen. Da es auch vorkommen kann, daß im Zuge einer Druckerinitialisierung kein Setup-Datensatz vom Benutzer ausgewählt wird, ist in einem weiteren, bevorzugten Ausführungsbeispiel vorgesehen, die Gerätesteuerung mit einem nicht flüchtigen Speicher zu verbinden, aus dem ein Default-Setup-Datensatz geladen werden kann. Stellt die Detektoreinrichtung für die Druckersprache fest, daß vom Benutzer kein Setup-Datensatz ausgewählt worden ist, so verwendet die Gerätesteuerung automatisch die Daten des Default-Setup-Datensatzes.

Weitere Ausführungsbeispiele der Erfindung werden nachfolgend anhand einiger Figuren näher erläutert.

Es zeigen:
**Figur 1:**
   Elektronische Komponenten zur Steuerung eines Druckers
**Figur 2:**
   Beispiele von Setup-Datensätzen,
**Figur 3:**
   ein Ablaufdiagramm zur Steuerung eines Druckers,
**Figur 4:**
   ein Ablaufdiagramm zur Steuerung des Druckers, wenn Druckdaten anliegen und
**Figur 5:**
   einen Drucker gemäß Stand der Technik.

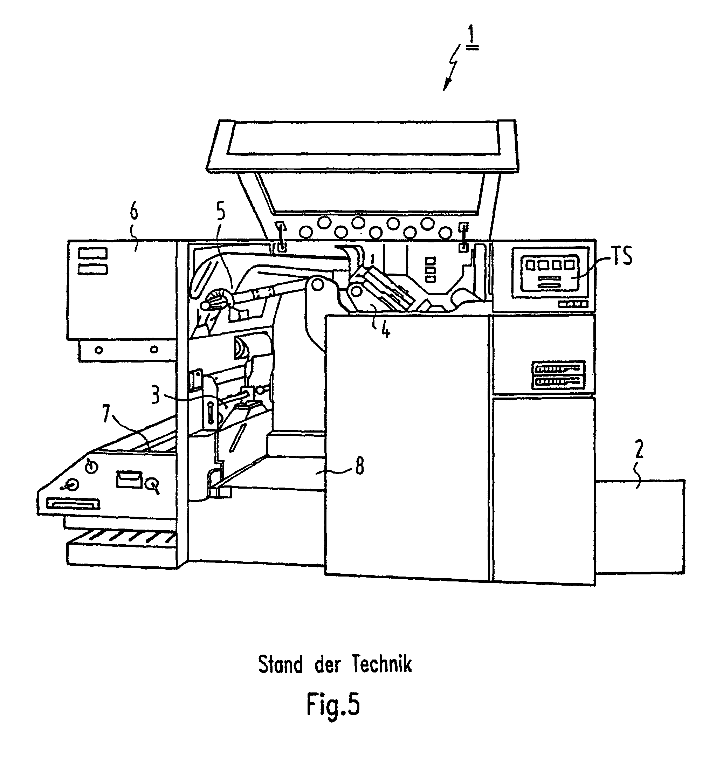

Ein elektrophotographischer Hochleistungsdrucker 1, wie er in Figur 5 dargestellt ist, umfaßt einen Papiervorrat 2, von welchem Papier 8 entnommen wird und über eine Papierzuführung 3 zu einem Druckwerk 4 transportiert wird. Die zu druckenden Informationen werden dort über einen elektrophotographischen Prozeß auf das Papier übertragen, indem Toner auf das Papier aufgetragen wird. Anschließend wird das Papier 8 von einer Übergabestation 5 an eine Fixierstation 6 weitergeleitet, in der der Toner durch Wärme auf dem Papier 8 fixiert wird. Schließlich wird das bedruckte Papier 8 auf einer Ablagestation 7 gestapelt, und kann zur weiteren Verarbeitung entnommen werden. Die Bedienung des Druckers 1 erfolgt über einen Anzeige- und Eingabebildschirm (Touch-Screen TS), bei dem die Bedienperson direkt am Bildschirm durch Berühren der Bildschirmoberfläche Informationen eingeben kann.

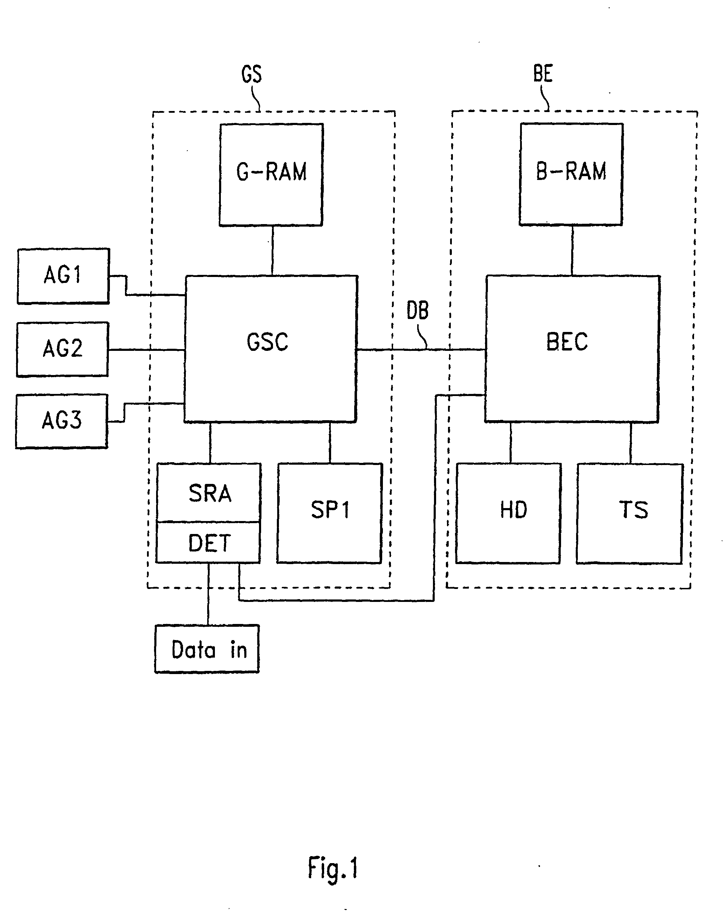

In Figur 1 sind elektronische Komponenten zum Steuern eines Druckers dargestellt. Eine Gerätesteuerung GS ist dabei über einen Datenbus DB mit einer Bedienfeldeinheit BE verbunden. Weiterhin ist sie mit verschiedenen elektronischen Aggregate-Steuerungen AG1, AG2 und AG3 verbunden, welche jeweils verschiedene Aggregate des Druckers ansteuern. Der Gerätesteuerungscontroller GSC ist über eine Drucksprachen-Verbindungseinheit SRA mit der Schnittstelle "Data in" zu einer EDV-Druckdatenquelle verbunden.

Nach dem Einschalten des Druckers wird aus einem nicht flüchtigen Speicher SP1 wie einem NV-RAM, EEPROM oder einer Festplatte ein Software-Programm in den flüchtigen Arbeitsspeicher G-RAM der Gerätesteuerung GS geladen. Dieses Programm steuert die weiteren Abläufe der Gerätesteuerung GS. Im Zuge des Ladens des Arbeitsprogramms in den Arbeitsspeicher G-RAM wird vom Controller GSC auch die Bedienfeldeinheit BE aktiviert. Dazu wird von einem nicht flüchtigen Speicher wie einer Festplatte HD der Bedienfeldeinheit BE ein Bedienfeld-Software-Programm in den Arbeitsspeicher B-RAM der Bedienfeldeinheit BE geladen.

Dieses Programm aktiviert wiederum den Touch-Screen TS. Ein Controller BEC der Bedienfeldeinheit BE steuert die Abläufe innerhalb der Bedienfeldeinheit BE. Die Bedienfeldeinheit BE ist innerhalb der Druckersteuerung ein selbständiges System, welches beispielsweise auf einem konventionellen PC (Personal Computer) basieren kann.

Die Datenübertragung zwischen Gerätesteuerung GS und Bedienfeldeinheit BE erfolgt über einen Datenbus DB, an dem die beiden Controller GSC und BEC angeschlossen sind. Der Datenbus DB kann als serielle oder parallele Schnittstelle ausgebildet sein.

Der Ablauf zur Inbetriebnahme eines Druckers ist nun folgendermaßen: in einen einmaligen Initialisierungsvorgang gibt ein Bediener an der Bedienfeldeinheit BE für eine bestimmte Art der Datenwiedergabe (Druckjob) maschinenabhängige Daten wie Papierbreite, Papierlänge etc. ein. Zusätzlich gibt er alle zu diesen Maschinen abhängigen Daten passenden Einstelldaten für unterschiedliche Druckersprachen (Emulations-Modes) ein. Alle zusammengehörenden maschinenabhängigen und Emulations-Modeabhängigen Daten eines Setups werden unter einem bestimmten Setup-Namen (z.B. Setup 1) auf der Festplatte HD der Bedienfeldeinheit BE hinterlegt. Insgesamt können auf der Festplatte HD der Bedienfeldeinrichtung BE so einige zig- oder sogar hundert Parametersätze (Setup-Datensätze) hinterlegt werden.

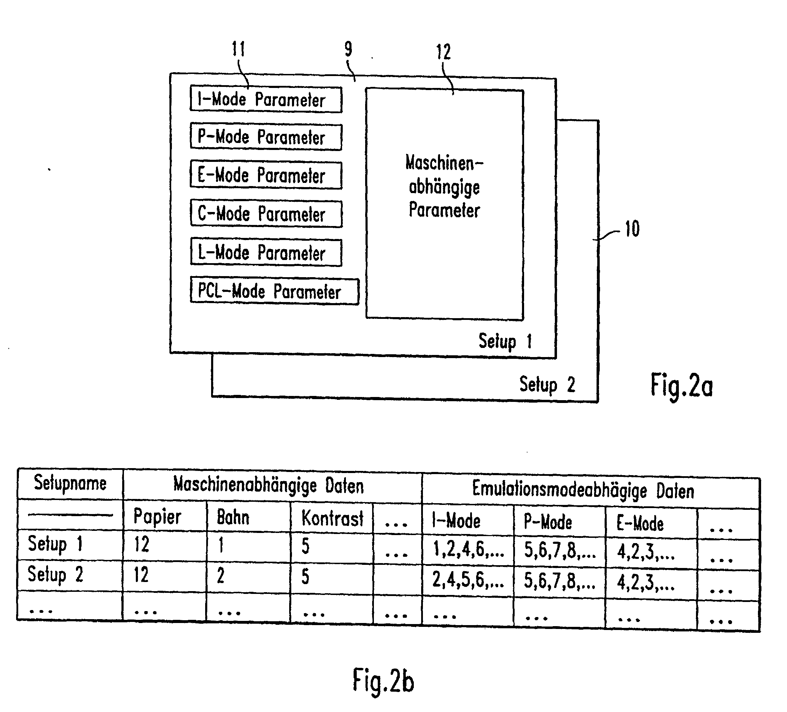

Figur 2a zeigt die so erzeugte Datenstruktur anhand eines Beispiels von zwei Setups 9 und 10. Jeder Setup-Datensatz ist in sprachabhängige Parameter 11 und in maschinenabhängige Parameter 12 unterteilt. In einem Setup-Datensatz sind jeweils die Daten verschiedener Druckersprachen (Emulations-Modes) gespeichert sowie dazu passende maschinenabhängige Parameter.

In Figur 2b sind beispielhafte Werte von maschinenabhängigen Daten und Emulations-Mode abhängigen Daten eines Setup-Datensatzes dargestellt.

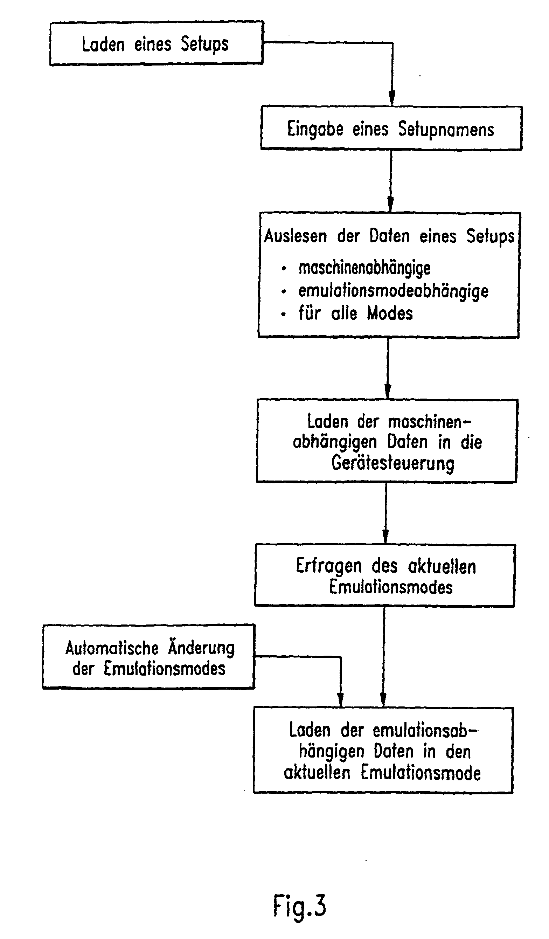

In Fig. 3 ist der Ablauf zum Laden eines Setups veranschaulicht. Dem Bediener des Druckers werden die Namen aller gespeicherten (hinterlegten) Setup-Datensätze in einer Liste angezeigt. Aus dieser Liste wählt der Bediener einen Setup-Datensatz aus, bzw. gibt den Namen des Setups ein. Im Bedienfeld werden die entsprechenden Daten dieses Setups,alle maschinenabhängigen Daten und alle emulationsabhängigen Daten aller Emulations-Modes - ausgelesen und in den Arbeitsspeicher der Bedienfeldeinheit geladen. Anschließend kontrolliert der Controller BEC der Bedienfeldeinheit BE, welche Druckdaten aktuell am Drucker anliegen. Dies geschieht über den Detektor DET eines Zeichengenerator-Controllers SRA in der Gerätesteuerung GS (siehe Fig. 1). Die Bedienfeldeinheit überträgt aus dem Speicher B-RAM die zu diesem Emulationsmode passenden Emulationsmode-Daten in den Arbeitsspeicher G-RAM der Gerätesteuerung.

Ändert sich im laufenden Betrieb der vom EDV-System kommende Druckdatenstrom auf einen anderen Emulationsmode (d.h. auf eine andere Druckersprache), so teilt dies der Detektor DET der Bedienfeldeinheit BE mit, welche dann die entsprechenden, zur neuen Druckersprache passenden Daten in den Arbeitsspeicher G-RAM der Gerätesteuerung GS lädt.

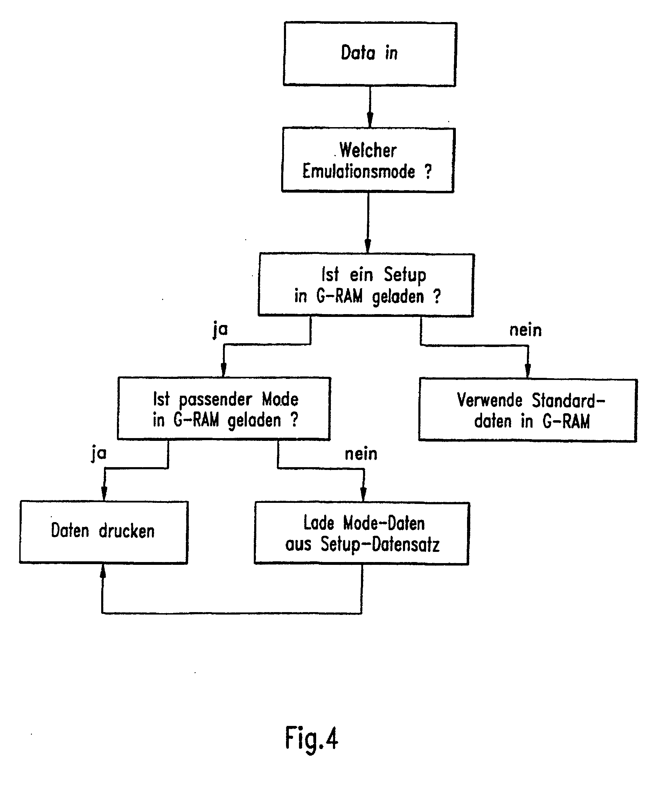

In Figur 4 ist nochmals im Detail dargestellt, welche Prüfungen erfolgen, wenn ein Datenstrom in die Gerätesteuerung GS gelangt. Der Detektor DET prüft, welcher Emulations-Mode bei den Daten vorliegt und meldet dieses Ergebnis an die Bedienfeldeinheit BE. Diese prüft, ob ein Setup-Datensatz in den Arbeitsspeicher G-RAM geladen ist. Ist dies der Fall, so wird geprüft, ob die zu diesem Mode passenden Mode-abhängigen Daten in G-RAM geladen sind. Wenn ja, werden die Daten gedruckt, wenn nein, so werden die entsprechenden Mode-Daten von B-RAM in G-RAM geladen.

Ist dagegen im Speicher G-RAM keinerlei Setup-Datensatz geladen, so werden Standard(Default)-Setup-Daten vom nicht flüchtigen Speicher SP1 der Gerätesteuerung in den Arbeitsspeicher G-RAM geladen.

Es wurden Ausführungsbeispiele beschrieben. Dabei ist klar, daß jederzeit Erweiterungen angegeben werden können. Beispielsweise kann vorgesehen werden, daß nur bestimmte Daten von einem Standard-Bediener eingestellt werden dürfen, und daß die Eingabe bestimmter Daten nur von autorisierten Personen unter Angabe eines entsprechenden Paßworts eingegeben bzw. geändert werden dürfen. Ferner ist klar, daß bei einem hochkomplexen Drucksystem wie elektrophotographischen Hochleistungsdruckern auch immer Parameter vorhanden sind, die nicht Bestandteil von Setup-Einstellungen sein können. Solche Daten sind - unabhängig von Setup-Datensätzen - in separaten Speicherbereichen abgelegt.

In einer Weiterführung der Erfindung kann beispielsweise vorgesehen werden, beim Initialsieren des Bedienfeldeinheiten-Programms alle Setup-Datensätze von der Festplatte der Bedienfeldeinheit in den Arbeitsspeicher der Bedienfeldeinheit zu laden. Dadurch können diese Datensätze vom Bediener sehr schnell geändert bzw. in den Arbeitsspeicher der Gerätesteuerung übertragen werden. Schließlich könnte vorgesehen sein, alle Setup-Datensätze in den Arbeitsspeicher der Gerätesteuerung zu laden und dort jeweils einen wunschgemäßen Datensatz zu aktivieren.

### Bezugszeichenliste

- AG1: Aggregatsteuerung 1
- AG2: Aggregatsteuerung 2
- AG3: Aggregatsteuerung 3
- BE: Bedienfeld
- BEC: Controller der Bedienfeldeinheit
- B-RAM: Arbeitsspeicher der Bedienfeldeinheit
- DB: Datenbus
- DET: Detektor für Emulationsmode
- G-RAM: Arbeitsspeicher der Gerätesteuerung
- GS: Gerätesteuerung
- GSC: Controller der Gerätesteuerung
- HD: Festplatte
- SP1: Speicher für Default-Werte
- SRA: Controller für Zeichengenerator
- TS: Touch Screen
- 1: Hochleistungsdrucker
- 2: Papiervorrat
- 3: Papierzuführung
- 4: Druckwerk
- 5: Übergabestation
- 6: Fixierstation
- 7: Ablagestation
- 8: Papier
- 9: Setup 1
- 10: Setup 2

## Patentansprüche

1. Verfahren zum Steuern eines Druckers (1), bei dem eine Vielzahl von Drucksprachen verarbeitbar ist und bei dem eine Vielzahl von sprachunabhängigen Parametern einstellbar sind, **dadurch gekennzeichnet, daß**
(a) in einem Initialisierungsvorgang verschiedene Setup-Datensätze erzeugt werden, wobei jeder Setup-Datensatz
(a1) sowohl sprachunabhängige Steuerungsdaten enthält als auch
(a2) sprachabhängige Steuerungsdaten zu mehreren verschiedenen Drucksprachen enthält,
(b) in einem ersten Ladevorgang die sprachunabhängigen Daten sowie die zu einer ersten Drucksprache gehörenden sprachabhängigen Daten eines der erzeugten Setup-Datensätze in einem Arbeitsspeicher (G-RAM) einer elektronischen Druckersteuerung (GS) geladen werden und
(c) im laufenden Druckbetrieb ein Druckdatenstrom hinsichtlich seiner Drucksprache überwacht wird und bei Erkennen einer zweiten Drucksprache in einem zweiten Ladevorgang die sprachabhängigen Daten der zweiten Drucksprache aus dem Setup-Datensatz in den Arbeitsspeicher (G-RAM) geladen werden.

2. Verfahren nach Anspruch 1, **dadurch gekennzeichnet, daß** nach dem Initialisierungsvorgang im Arbeitsspeicher (B-RAM) einer Bedienfeldeinheit (BE) ein Setup-Datensatz mit den sprachabhängigen Daten mehrerer Drucksprachen gespeichert wird und im zweiten Ladevorgang die Steuerungsdaten zur zweiten Drucksprache aus dem Arbeitsspeicher (B-RAM) in die Gerätesteuerung (GS) geladen werden.

3. Verfahren nach Anspruch 1 oder 2, **dadurch gekennzeichnet, daß** im Initialisierungsvorgang eine Vielzahl von Setup-Datensätzen auf einem nicht flüchtigen Speicher (HD), insbesondere auf einer Festplatte eines Bedienfeld-Computers, gespeichert wird.

4. Verfahren nach einem der Ansprüche 2 oder 3, **dadurch gekennzeichnet, daß** im ersten Ladevorgang die sprachunabhängigen Daten sowie die zur ersten Drucksprache gehörenden sprachabhängigen Daten des Setup-Datensatzes vom Abeitsspeicher (B-RAM) der Bedienfeldeinheit (BE) in den Arbeitsspeicher (G-RAM) der Druckersteuerung (GS) geladen werden.

5. Verfahren nach einem der Ansprüche 1 bis 4, **dadurch gekennzeichnet, daß** beim Empfang von Druckdaten einer bestimmten Drucksprache die der Drucksprache entsprechenden Steuerungsdaten des im Arbeitsspeicher (G-RAM) geladenen Setup-Datensatzes zur Steuerung des Druckers (1) verwendet werden.

6. Verfahren nach einem der vorhergehenden Ansprüche, **dadurch gekennzeichnet, daß** mit einer Detektoreinrichtung (DET) ermittelt wird, in welcher Drucksprache die Druckdaten vorliegen und daß aus dem Arbeitsspeicher (G-RAM) die der ermittelten Drucksprache entsprechenden Steuerungsdaten verwendet werden.

7. Drucker zum Ausdrucken von Datenströmen verschiedener Drucksprachen mit einer Gerätesteuerung (GS), in der mehrere Steuerungsdaten gespeichert sind, **dadurch gekennzeichnet, daß**
(a) in einem Initialisierungsvorgang verschiedene Setup-Datensätze erzeugt werden, wobei jeder Setup-Datensatz
(a1) sowohl sprachunabhängige Steuerungsdaten enthält als auch
(a2) sprachabhängige Steuerungsdaten zu mehreren verschiedenen Drucksprachen enthält,
(b) in einem ersten Ladevorgang die sprachunabhängigen Daten sowie die zu einer ersten Drucksprache gehörenden sprachabhängigen Daten eines der erzeugten Setup-Datensätze in einem Arbeitsspeicher (G-RAM) der Druckersteuerung (GS) geladen werden und
(c) ein Detektor (DET) vorgesehen ist, mit dem im laufenden Druckbetrieb ein Druckdatenstrom hinsichtlich seiner Drucksprache überwacht wird, wobei bei Erkennen einer zweiten Drucksprache in einem zweiten Ladevorgang die sprachabhängigen Daten der zweiten Drucksprache aus dem Setup-Datensatz in den Arbeitsspeicher (G-RAM) geladen werden.

8. Drucker nach Anspruch 7, **dadurch gekennzeichnet, daß** in den Arbeitsspeicher (G-RAM) wahlweise ein benutzerdefinierter Setup-Datensatz von einer Bedienfeldeinheit (BE) oder ein vorgegebener Default-Setup-Datensatz aus einem nicht flüchtigen Speicher (SP1) der Gerätesteuerung (GS) in den Arbeitsspeicher (G-RAM) ladbar ist, daß die Detektoreinrichtung (DET) für die Drucksprache hinsichtlich des Druckerdatenstroms der Gerätesteuerung (GS) vorgeschalten ist und daß zum Drucken Daten des Default-Setup-Datensatzes verwendet werden, wenn kein benutzerdefinierter Setup-Datensatz geladen ist.

9. Drucker nach einem der Ansprüche 6 bis 8, **dadurch gekennzeichnet, daß** die Gerätesteuerung (GS) zur Steuerung verschiedener Aggregatesteuerungen (AG1, AG2, AG3) des Druckers (1) vorgesehen ist, daß die Bedienfeldeinheit (BE) mit der Gerätesteuerung (GS) zum Austausch von Daten verbunden ist und daß in der Bedienfeldeinheit (BE) verschiedene Setup-Datensätze gespeichert sind.

## Claims

1. Method for controlling a printer (1), wherein a plurality of printer languages can be processed and wherein a plurality of language-independent parameters can be set, **characterized in that**
(a) various set-up data sets are generated in an initialisation operation, each set-up data set
(a1) containing both language-independent control data as well as
(a2) language-dependent control data for several different printer languages,
(b) in a first loading operation, the language-independent data as well as the language-dependent data of one of the generated set-up data sets and appertaining to a first printer language are loaded into a main memory (G-RAM) of an electronic printer controller (GS), and
(c) during ongoing printer operation, a print data stream is monitored with regard to its printer language and in the case of detection of a second printer language, the language-dependent data of the second printer language are loaded from the set-up data set into the main memory (G-RAM) in a second loading operation.

2. Method according to claim 1, **characterized in that** after the initialisation operation, a set-up data set comprising the language-dependent data of several printer languages is stored in the main memory (B-RAM) of a control panel unit (BE) and in the second loading operation the control data for the second printer language are loaded from the main memory (B-RAM) into the device controller (GS).

3. Method according to claim 1 or 2, **characterized in that** in the initialisation operation a plurality of set-up data sets is stored on a non-volatile memory (HD), in particular on a hard disk of a control panel computer.

4. Method according to one of the claims 2 or 3, **characterized in that** in the first loading operation the language-independent data as well as the language-dependent data of the set-up data set that appertain to the first printer language are loaded from the main memory (B-RAM) of the control panel unit (BE) into the main memory (G-RAM) of the printer controller (GS).

5. Method according to one of the claims 1 to 4, **characterized in that** in the case of reception of print data of a specific printer language, the control data corresponding to the printer language of the set-up data set loaded in the main memory (G-RAM) are used for controlling the printer (1).

6. Method according to one of the preceding claims, **characterized in that** it is determined with the aid of a detector means (DET) in which printer language the print data are present and that from the main memory (G-RAM) the control data corresponding to the printer language determined are used.

7. Printer for printing out data streams of different printer languages, comprising a device controller (GS), in which several control data are stored, **characterized in that**
(a) in an initialisation operation, several set-up data sets are generated, each set-up data set
(a1) containing language-independent control data as well as
(a2) language-dependent control data for several different printer languages,
(b) in a first loading operation, the language-independent data as well as the language-dependent data of one of the generated set-up data sets and appertaining to a first printer language are loaded into a main memory (G-RAM) of the printer controller (GS), and
(c) a detector (DET) is provided, by means of which during the ongoing printing operation a print data stream is monitored with regard to its printer language, the language-dependent data of the second printer language being loaded from the set-up data set into the main memory (G-RAM) in a second loading operation in the case of detection of a second printer language.

8. Printer according to claim 7, **characterized in that** optionally a user-defined set-up data set from a control panel unit (BE) or a predetermined default set-up data set from a non-volatile memory (SP1) of the device controller (GS) can be loaded into the main memory (G-RAM), **in that** the detector means (DET) for the printer language is pre-arranged with regard to the printer data stream of the device controller (GS) and **in that** data of the default set-up data set are used for printing when no user-defined set-up data set is loaded.

9. Printer according to one of the claims 6 to 8, **characterized in that** the device controller (GS) is provided for controlling various aggregate controllers (AG1, AG2, AG3) of the printer (1), **in that** the control panel unit (BE) is connected to the device controller (GS) for the exchange of data and **in that** several set-up data sets are stored in the control panel unit (BE).

## Revendications

1. Procédé de commande d'un appareil d'impression (1), dans lequel peuvent être traités un grand nombre de protocoles d'impression et dans lequel peuvent être réglés un grand nombre de paramètres indépendants des protocoles, **caractérisé en ce que** :
(a) il est généré dans un processus d'initialisation différents ensembles de données de réglage, chaque ensemble de données de réglage comportant :
(a1) aussi bien des données de commande indépendantes des protocoles, que
(a2) des données de commande dépendantes des protocoles et liées à plusieurs protocoles d'impression différents,
(b) dans un premier processus de chargement, les données indépendantes des protocoles ainsi que les données dépendantes des protocoles, appartenant à un premier protocole d'impression, de l'un des ensembles de données de réglage générés sont chargées dans une mémoire de travail (G-RAM) d'une commande électronique d'appareil d'impression (GS), et
(c) dans le mode d'impression courant, le protocole d'impression d'un flux de données d'impression est contrôlé, et en cas de détection d'un deuxième protocole d'impression les données dépendantes des protocoles du deuxième protocole d'impression, issues de l'ensemble de données de réglage, sont chargées dans la mémoire de travail (G-RAM) dans un deuxième processus de chargement.

2. Procédé selon la revendication 1, **caractérisé en ce qu'**après le processus d'initialisation, un ensemble de données de réglage comportant les données dépendantes de plusieurs protocoles d'impression est mémorisé dans la mémoire de travail (B-RAM) d'une unité d'interface utilisateur (BE) et, dans le deuxième processus de chargement les données de commande liées au deuxième protocole d'impression sont chargées de ladite mémoire de travail (B-RAM) dans la commande d'appareil (GS).

3. Procédé selon la revendication 1 ou 2, **caractérisé en ce que**, dans le processus d'initialisation, un grand nombre d'ensembles de données de réglage est mémorisé dans une mémoire non volatile (HD), en particulier un disque dur d'un ordinateur d'interface utilisateur.

4. Procédé selon l'une des revendications 2 ou 3, **caractérisé en ce que**, dans le premier processus de chargement, les données indépendantes des protocoles ainsi que les données dépendantes des protocoles, appartenant au premier protocole d'impression, de l'ensemble de données de réglage, sont chargées de la mémoire de travail (B-RAM) de l'unité d'interface utilisateur (BE) dans la mémoire de travail (G-RAM) de la commande d'appareil d'impression (GS).

5. Procédé selon l'une des revendications 1 à 4, **caractérisé en ce que** lors de la réception de données d'impression d'un protocole d'impression déterminé, les données de commande, correspondant au protocole d'impression, de l'ensemble de données de réglage chargé dans la mémoire de travail (G-RAM) sont utilisées pour commander l'appareil d'impression (1).

6. Procédé selon l'une des revendications précédentes, **caractérisé en ce qu'**il est déterminé au moyen d'un dispositif détecteur (DET), dans quel protocole d'impression se trouvent les données d'impression, et **en ce que** les données de commande, correspondant au protocole d'impression déterminé, sont utilisées à partir de la mémoire de travail (G-RAM).

7. Appareil d'impression destiné à imprimer des flux de données de différents protocoles d'impression, comportant une commande d'appareil d'impression (GS) dans laquelle sont mémorisées plusieurs données de commande, **caractérisé en ce que** :
(a) il est généré dans un processus d'initialisation différents ensembles de données de réglage, chaque ensemble de données de réglage comportant :
(a1) aussi bien des données de commande indépendantes des protocoles, que
(a2) des données de commande dépendantes des protocoles et liées à plusieurs protocoles d'impression différents,
(b) dans un premier processus de chargement, les données indépendantes des protocoles ainsi que les données dépendantes des protocoles, appartenant à un premier protocole d'impression, de l'un des ensembles de données de réglage générés sont chargées dans une mémoire de travail (G-RAM) de la commande d'appareil d'impression (GS), et
(c) il est prévu un détecteur (DET) permettant de contrôler, dans le mode d'impression courant, le protocole d'impression, d'un flux de données d'impression, en cas de détection d'un deuxième protocole d'impression, les données dépendantes des protocoles du deuxième protocole d'impression, issues de l'ensemble de données de réglage, étant chargées dans la mémoire de travail (G-RAM) dans un deuxième processus de chargement.

8. Appareil d'impression selon la revendication 7, **caractérisé en ce que** l'on peut charger au choix un ensemble de données de réglage défini par l'utilisateur d'une unité d'interface utilisateur (BE) dans la mémoire de travail (G-RAM), ou bien un ensemble prédéterminé de données de réglage par défaut d'une mémoire non volatile (SP1) de la commande d'appareil (GS) dans la mémoire de travail (G-RAM), **en ce que** le dispositif détecteur (DET) pour le protocole d'impression du flux de données est placé en amont de la commande d'appareil (GS), et **en ce qu'**il est utilisé, en vue de l'impression, des données de l'ensemble de données de réglage par défaut lorsqu'aucun ensemble de données de réglage défini par l'utilisateur n'est chargé.

9. Appareil d'impression selon l'une des revendications 6 à 8, **caractérisé en ce que** la commande d'appareil (GS) est prévue pour commander différentes commandes d'unité (AG1, AG2, AG3) de l'appareil d'impression (1), **en ce que** l'unité d'interface utilisateur (BE) est reliée à la commande d'appareil (GS) en vue d'échanger des données, et **en ce que** différents ensembles de données de réglage sont mémorisés dans l'unité d'interface utilisateur (BE).
